# EUROPEAN PATENT SPECIFICATION

(11) **EP 3 533 977 B1**
(45) Date of publication and mention of the grant of the patent: **04.10.2023**
(21) Application number: 17863577.7
(22) Date of filing: 27.10.2017
(51) Int. Cl.: F01N 3/04, F01N 13/00, F01N 13/08, B63H 21/14, F01N 3/021, B01D 47/06, F23J 15/04, F01N 3/08

(54) **DEVICE FOR DISCHARGING EXHAUST GAS**
VORRICHTUNG ZUR ABFÜHRUNG VON ABGAS
DISPOSITIF DE DÉCHARGE DE GAZ D'ÉCHAPPEMENT

(30) Priority: 28.10.2016 KR 20160142262; 28.10.2016 KR 20160142290
(43) Date of publication of application: 04.09.2019
(73) Proprietor: Samsung Heavy Industries Co., Ltd., Seoul 06620 (KR); Jung Won E&C Co., Ltd., Chungcheongnam-do 31256 (KR)
(72) Inventor: LEE, Seung Jae, Geoje-si Gyeongsangnam-do 53261 (KR); PARK, Hee Jun, Geoje-si Gyeongsangnam-do 53261 (KR); OH, Won Chul, Seoul 05409 (KR)
(74) Representative: Keenway Patentanwälte Neumann Heine Taruttis
(86) International application number: PCT/KR2017/012009
(87) International publication number: WO 2018/080235

(56) References cited:
- EP-A1- 2 711 067
- WO-A1-99/44722
- WO-A1-2019/216501
- JP-A- 2002 332 919
- JP-A- 2002 332 919
- JP-A- 2007 051 555
- JP-A- 2007 051 555
- JP-A- 2010 167 330
- KR-A- 20110 073 929
- KR-A- 20110 073 929
- KR-A- 20150 042 861
- KR-A- 20150 056 104

## Description

### [Technical Field]

The present invention relates to an exhaust gas discharge device, and more particularly, to an exhaust gas discharge device capable of purifying a variety of types of exhaust gases discharged from different combustion engines in a batch.

### [Background Art]

In general, a variety of engines installed in a vessel generate power by burning fossil fuel. Here, exhaust gases generated during a process of burning fuel include harmful substances such as sulfur oxides (SOx), nitrogen oxides (NOx), particulate matter (PM), and the like. Accordingly, when exhaust gases are directly discharged, air pollution may be caused. Because of this, environmental regulations with respect to air pollution of vessels have been reinforced, and a variety of disposal devices are applied to a vessel to satisfy a variety of regulations.

Among environmental regulations with respect to air pollution, a regulation has gone into effect in which sulfur oxides included in exhaust gases discharged from engines while a vessel sails and is at anchor is defined to be 0.1% or less in a marine exhaust gas emission control area (ECA). As a method of removing sulfur oxides, ultralow sulfur fuel including a sulfur content of 0.1% or less may be used or a wet scrubber may be applied. However, since ultralow sulfur fuel is very expensive and systems such as production facilities and the like are inadequate, generally, wet scrubbers, which remove sulfur oxides by allowing seawater, pure water, or an alkaline solution to come into vapor-liquid contact with exhaust gases, have been used.

EP 2 711 067 describes a combined cleaning system to be used in a wet scrubber process for the reduction of SO x and NO x in exhaust gases from a combustion engine wherein the system comprises an Exhaust Gas Cleaning (EGC) scrubber and an Exhaust Gas Recirculation (EGR) scrubber.

JP 2010 167330 A describes a wet two-stage desulfurization equipment that suitably disposes an absorbent spray nozzle in a venturi scrubber to efficiently absorb and remove micro ingredients such as mercury components and fluorine components from exhaust gas.

WO 99/44722 A1 describes a device for reducing contaminants in a pulsating exhaust gas, particularly diesel exhaust, on board ships, which apparatus comprises a wet scrubber.

JP 2007 051555 A describes an exhaust emission control device of a diesel engine.

KR 2011 0073929 A describes an exhaust structure for a ship comprises a spraying chamber and exhaust pipes, a spraying device and an exhaust unit, wherein the spraying chamber is formed in the hull of the ship.

JP 2002 332919 A describes an exhaust gas recirculation method.

However, a conventional system using a wet scrubber has a problem in which when a variety of exhaust gases discharged from different engines are supplied to the scrubber, countercurrents occur due to different suction pressures such that driving is not smoothly performed.

### [Disclosure]

### [Technical Problem]

The present invention is directed to providing an exhaust gas discharge device capable of purifying a variety of exhaust gases discharged from different combustion engines in a batch.

It should be noted that technical objects of the present invention are not limited to the above-described technical objects, and other technical objects of the present invention will be apparent to those skilled in the art from the following descriptions.

It should be noted that objects of the present invention are not limited to the above-described objects, and other objects of the present invention will be apparent to those skilled in the art from the following descriptions.

### [Technical Solution]

The present invention provides an exhaust gas discharge device according to claim 1. Further advantageous embodiments are mentioned in the depending claims.

Details are included in a detailed description and drawings.

### [Advantageous Effects]

According to the present invention, instead of installing a wet scrubber, pollutants included in exhaust gases may be removed by supplying cleaning water to a pre-installed funnel. Accordingly, a cost of installing the web scrubber may be cut and space utilization may be maximized.

Also, countercurrents caused by different suction pressures of exhaust gases discharged from different combustion engines may be prevented by installing a cleaning water spray nozzle in each of a plurality of exhaust pipes connected to the funnel.

Also, countercurrents caused by different suction pressures of exhaust gases discharged from different combustion engines may be prevented and mixing thereof may be enhanced by installing a cleaning water supply pipe and agitating blades in each of a plurality of exhaust pipes connected to the funnel.

### [Description of Drawings]

FIG. 1 is a block diagram schematically illustrating components of an exhaust gas discharge device.
FIG. 2 is a schematic diagram illustrating a shape of an exhaust pipe and a funnel of FIG. 1.
FIGS. 3 to 5 are operational views illustrating operations of the exhaust gas discharge device.
FIG. 6 is a block diagram schematically illustrating components of the exhaust gas discharge device.
FIG. 7 is a schematic diagram illustrating a shape of an exhaust pipe of FIG. 6.
FIG. 8 is an enlarged view illustrating agitating blades installed in the exhaust pipe.
FIGS. 9 and 10 are operational views illustrating operations of the exhaust gas discharge device.

### [Modes of the Invention]

Hereinafter, The present invention will be described in detail with reference to the attached drawings. Advantages and features of the present invention and methods of achieving them will be specified with reference to the attached drawings The present invention is only defined by the scope of the claims. Throughout the specification, like reference numerals refer to like elements.

When it is stated that an element or a layer is "on" another element or layer, not only being directly on another element or layer but also interposing another layer or element therebetween are included. On the other hand, when it is stated that an element is "directly on" another, there is no other element or layer interposed therebetween.

Terms which are spatially relative such as "below," "beneath," "lower," "above," "upper," and the like may be used to easily describe a relationship between one element or component and another element or component as shown in the drawings. The spatially relative terms should be understood as terms which include different directions of an element when the element is used or operates in addition to directions shown in the drawings. For example, when an element shown in the drawing is turned upside down, the element described as being "below" or "beneath" another element may be disposed "above" the other element. Accordingly, "below," which is an exemplary term, may include both downward and upward directions. The element may be arranged in another direction such that the spatially relative terms may be understood according to arrangement.

Although first, second, and the like are used for describing a variety of elements, components, and/or sections, the elements, components, and/or sections are not limited to the terms. These terms are used for merely distinguishing one element, component, or section from another element, component, or section. Accordingly, a first element, a first component, or a first section which is stated below may be a second element, a second component, or a second section within the technical concept of the present invention.

The terms used herein are for explaining but are not intended to limit the present invention. Throughout the specification, unless particularly defined otherwise, singular forms include plural forms. The terms "comprises" and/or "comprising" are used herein as meanings which do not exclude presence or addition of one or more other components, stages, operations, and/or elements in addition to stated components, stages, operations, and/or elements.

Unless defined otherwise, all the terms (including technical and scientific terms) have the same meaning as commonly understood by one of ordinary skill in the art. Also, terms such as those defined in commonly used dictionaries should not be interpreted in an idealized or excessively formal sense unless defined otherwise.

Hereinafter, the present invention will be described in detail with reference to the attached drawings. In the description with reference to the attached drawings, irrelative to reference numerals, like or corresponding components will be referred to as the same reference numerals and an overlapping description thereof will be omitted.

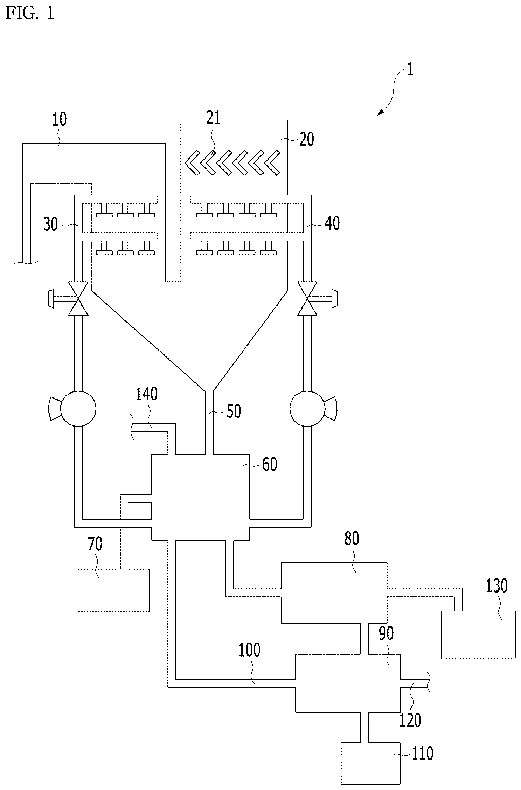

Hereinafter, an exhaust gas discharge device will be described in detail with reference to FIGS. 1 to 5.

The exhaust gas discharge device according to the present invention is a device capable of reducing concentrations of a variety of pollutants (nitrogen oxides, sulfur oxides, and particulate matter, and the like) included in exhaust gases and discharging gases adequate for exhaust standards and may be used mainly while being mounted in a vessel.

The exhaust gas discharge device may remove pollutants included in exhaust gases by supplying cleaning water to a pre-installed funnel instead of installing a wet scrubber. Accordingly, a cost of installing the web scrubber may be cut and space utilization may be maximized. Also, countercurrents caused by different suction pressures of exhaust gases discharged from different combustion engines may be prevented by installing a cleaning water spray nozzle in each of a plurality of exhaust pipes connected to the funnel.

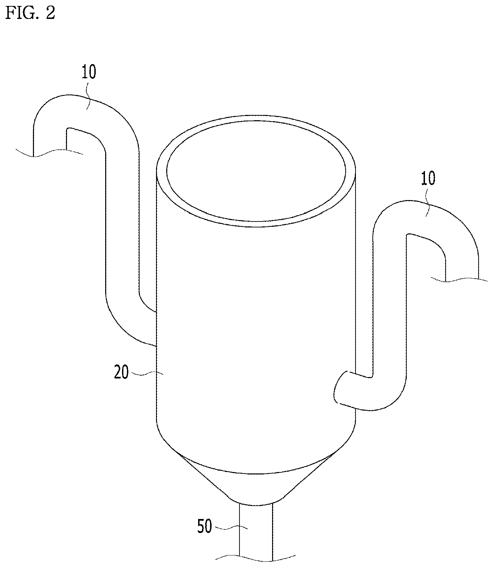

Hereinafter, an exhaust gas discharge device 1 will be described in detail with reference to FIGS. 1 and 2.

FIG. 1 is a block diagram schematically illustrating components of an exhaust gas discharge device, and FIG. 2 is a schematic diagram illustrating a shape of an exhaust pipe and a funnel of FIG. 1.

The exhaust gas discharge device 1 includes at least one exhaust pipe 10, a funnel 20, a first cleaning water spray nozzle 30, a second cleaning water spray nozzle 40, and a cleaning water discharge pipe 50.

The exhaust pipe 10 is a pipe through which exhaust gases of a combustion engine (not shown) are supplied downward from above, and at least one exhaust pipe is connected to the funnel 20 which will be described below. The exhaust pipe 10 may be a path which is connected directly to an exhaust port of the combustion engine to allow high-temperature exhaust gases to move directly therethrough or may be a path through which waste gases move which remain after almost all exhaust heat is reused while passing through a variety of heat exchangers. Here, the combustion engine is a device which generates a variety of types of power necessary for a vessel by burning fuel and may include for example, a main engine, a generator, and the like. The exhaust pipe 10 may be connected to each of exhaust ports of a plurality of such combustion engines and be bent downward from above to induce a flow of exhaust gases supplied to the funnel 20 to move upward.

Here, the combustion engine is a device which generates a variety of types of power necessary for a vessel by burning fuel and may include for example, a main engine, a generator, and the like. The exhaust pipe 10 may be connected to each of exhaust ports of a plurality of such combustion engines and the plurality of exhaust engines may operate selectively and discharge exhaust gases. Since the combustion engines generally generate power by burning fossil fuel, exhaust gases are generated according to combustion of fossil fuel. The generated exhaust gases include a large amount of nitrogen oxides, sulfur oxides, and particulate matter, and the like and are supplied to the funnel 20 through the exhaust pipe 10 connected to the exhaust ports of the combustion engines.

The funnel 20 may be a device connected to a bottom of the exhaust pipe 10 and configured to discharge exhaust gases which have passed through the exhaust pipe 10 to the outside. Referring to FIG. 2, a plurality of such exhaust pipes 10 may be connected to the funnel 20, may each be connected to different combustion engines, and be arranged radially below the funnel 20. Here, the plurality of exhaust pipes 10 may have different diameters according to capacities of the combustion engines connected thereto. That is, the exhaust gas discharge device 1 according to the present invention has a structure in which exhaust gases are discharged from different combustion engines through one funnel 20 in a batch. However, the exhaust pipe 10 and the funnel 20 are not limited to being separately formed, and for example, the exhaust pipe 10 and the funnel 20 may be integrally connected. When the exhaust pipe 10 and the funnel 20 are integrally connected, at least a part thereof may be consecutively bent upward and downward to form a bent portion so as to induce exhaust gases quickly and easily flow therethrough.

The first cleaning water spray nozzle 30 and the second cleaning water spray nozzle 40 are installed in the exhaust pipe 10 and the funnel 20, respectively.

Since the first cleaning water spray nozzle 30 is configured to spray at least one cleaning water of seawater, pure water, and a mixture of seawater onto an inside of the exhaust pipe 10, one end thereof may be connected to a seawater supply pipe 140 or a pure water supply pipe (not shown) and the other end may be connected to the exhaust pipe 10. That is, the first cleaning water spray nozzle 30 selectively receives and sprays seawater and pure water onto the inside of the exhaust pipe 10.

Since the second cleaning water spray nozzle 40 is configured to spray at least one cleaning water of seawater, pure water, and a mixture of seawater onto an inside of the funnel 20, one end thereof may be connected to the seawater supply pipe 140 or the pure water supply pipe and the other end may be connected to the funnel 20. That is, the second cleaning water spray nozzle 40 selectively receives and sprays seawater and pure water onto the inside of the funnel 20.

Hereinafter, a process in which seawater flows into the first cleaning water spray nozzle 30 and the second cleaning water spray nozzle 40 and is mainly sprayed through the exhaust pipe 10 and the funnel 20 when cleaning water is limited to seawater will be described in more detail.

The seawater supply pipe 140 is a pipe which suctions and supplies seawater and may suction seawater from the sea. However, the seawater supply pipe 140 is not limited to suctioning and supplying seawater from the sea and may receive seawater stored in a tank as necessary. A part of seawater which flows in through the seawater supply pipe 140 is sprayed through the exhaust pipe 10 through the first cleaning water spray nozzle 30, and another part is sprayed through the funnel 20 through the second cleaning water spray nozzle 40.

The first cleaning water spray nozzle 30 is disposed above a connection path which connects the exhaust pipe 10 to the funnel 20 and may diverge into a plurality of portions to spray cleaning water in the form of particles. Since the first cleaning water spray nozzle 30 sprays cleaning water in the form of particles to a top of the connection path which connects the exhaust pipe 10 to the funnel 20, pollutants such as nitrogen oxides, sulfur oxides, particulate matter, and the like included in exhaust gas which flows to the funnel 20 along the exhaust pipe 10 may dissolve in the cleaning water and removed from the exhaust gases. Particularly, the first cleaning water spray nozzle 30 may spray cleaning water uniformly on an entirety of a lateral cross section inside the exhaust pipe 10. Accordingly, a contact rate between the exhaust gases and the cleaning water increases such that pollutants may be effectively removed. Simultaneously, the cleaning water sprayed from the first cleaning water spray nozzle 30 forms a water curtain such that the exhaust gases may be prevented from flowing backward due to different suction pressures. Also, since the sprayed cleaning water decreases a temperature of the exhaust gases, efficiency of removing pollutants from the funnel 20 may be increased. A plurality of such first cleaning water spray nozzles 30 may be arranged to overlap with one another at different heights. Since the plurality of first cleaning water spray nozzles 30 are arranged to overlap with one another at different heights, an effect of removing pollutants and an effect of preventing countercurrents of exhaust gases may be maximized.

The second cleaning water spray nozzle 40 may be disposed above the funnel 20 and may diverge into a plurality of portions to spray cleaning water in the form of particles. Since the second cleaning water spray nozzle 40 sprays cleaning water in the form of particles onto the inside of the funnel 20, pollutants included in exhaust gases which flow through the funnel 20 may dissolve in the cleaning water and be removed from the exhaust gases additionally such that the exhaust gases from which the pollutants are removed may be discharged outward through a top of the funnel 20. Since pollutants such as nitrogen oxides, sulfur oxides, particulate matter, and the like are removed from the exhaust gases discharged through the top of the funnel 20, the exhaust gases become adequate for exhaust standards so as to be directly discharged into the air. Also, a plurality of such second cleaning water spray nozzles 40 may be arranged to overlap with one another at different heights like the first cleaning water spray nozzles 30. Since the plurality of second cleaning water spray nozzles 40 are arranged to overlap with one another at different heights, an effect of removing pollutants in the funnel 20 may be improved.

Also, a droplet separator 21 may be installed inside the funnel 20. The droplet separator 21 is configured to come into contact with exhaust gases discharged through the funnel 20 and to condense water particles included in the exhaust gases and may be installed at a top end of the second cleaning water spray nozzle 40 while including a plurality of structures. Since the droplet separator 21 is installed at the top end of the second cleaning water spray nozzle 40 to come into contact with cleaning water, water particles are removed from exhaust gases which include the water particles such that the exhaust gases may be discharged while being dried and the water particles removed from the exhaust gases may be collected and reused.

The cleaning water, which comes into contact with the exhaust gases including pollutants and includes nitrogen oxides, sulfur oxides, particulate matter, and the like, is discharged to the outside through the cleaning water discharge pipe 50 while forming nitric acid and sulfuric acid of a strong acid. The cleaning water discharge pipe 50 is formed below the funnel 20 and collects and discharges the cleaning water sprayed on the exhaust pipe 10 and the funnel 20 to the outside. The cleaning water discharge pipe 50 may have a narrow duct to prevent the discharged cleaning water from flowing backward due to pitching of a vessel such as sloshing and rolling. When the exhaust pipe 10 and the funnel 20 are integrally connected to form the bent portion as described above, the cleaning water discharge pipe 50 may be connected to a bottom of the bent portion and may discharge cleaning water. The cleaning water discharge pipe 50 is connected to the bottom of the bent portion such that the cleaning water may be easily discharged. A storage tank 60 is connected to the cleaning water discharge pipe 50.

The storage tank 60 is configured to temporarily store the cleaning water discharged from the funnel 20, and the seawater supply pipe 140, the first cleaning water spray nozzle 30, the second cleaning water spray nozzle 40, and the cleaning water discharge pipe 50 may be connected to the storage tank 60. That is, cleaning water which flows through the seawater supply pipe 140 and passes through the storage tank 60 is supplied to each of the first cleaning water spray nozzle 30 and the second cleaning water spray nozzle 40, and cleaning water discharged through the cleaning water discharge pipe 50 passes through the storage tank 60 and moves to a filter unit 80 which will be described below.

Also, a neutralizing agent supply portion 70, which supplies a neutralizing agent, may be connected to one side of the storage tank 60 and may neutralize strong acidic cleaning water discharged from the exhaust pipe 10 and the funnel 20. The neutralizing agent may be an alkaline solution, for example, sodium hydroxide (NaOH) or sodium hypochlorite (NaOCI). The neutralizing agent supply portion 70 may be formed as a device which directly produces a neutralizing agent by electrolyzing seawater and the like or may be formed as a simple neutralizing agent tank in which a neutralizing agent is stored. A sensor portion (not shown) may be installed on one side of the storage tank 60 to detect a pH value of the cleaning water in real time, and the neutralizing agent supply portion 70 may adjust a supply amount of a neutralizing agent adequately in association with the sensor portion.

The filter unit 80 is installed at a rear end of the storage tank 60 and configured to separate particulate matter and may be formed as at least one of a centrifuge, a gravity separator, and a filter. That is, particulate matter may be removed from cleaning water neutralized in the storage tank 60 in the filter unit 80, and the cleaning water from which the particulate matter is removed and which includes salt may be supplied to an additional separator 90 to be separated into salt and cleaning water. The salt separated from the cleaning water may be stored in an additional salt storage tank 110, and the cleaning water from which the salt is removed may be circulated to the storage tank 60 through a circulation pipe 100 or may be discharged to the sea through a seawater discharge pipe 120. Meanwhile, the particulate matter separated from the filter unit 80 may be stored in a sludge tank 130.

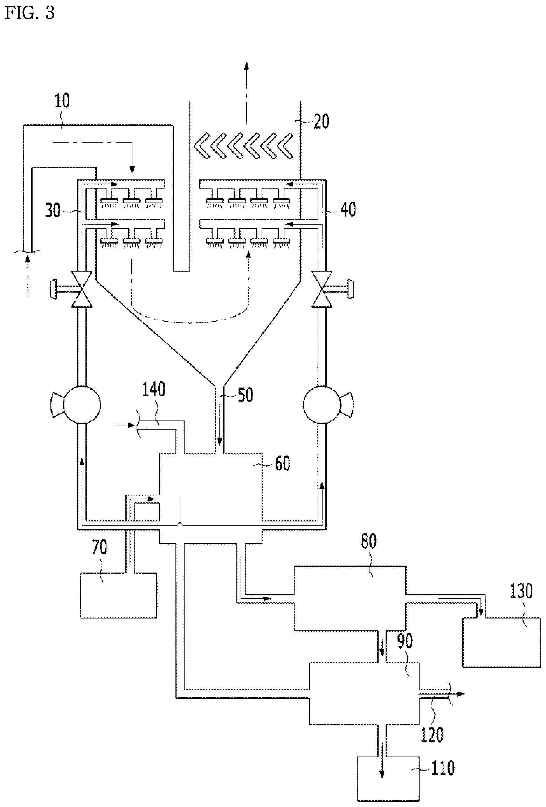

Hereinafter, operations of the exhaust gas discharge device 1 will be described in detail with reference to FIGS. 3 to 5.

FIGS. 3 to 5 are operational views illustrating operations of the exhaust gas discharge device.

In the exhaust gas discharge device 1 according to the present invention, pollutants included in exhaust gases may be removed by supplying cleaning water to the funnel 20 which is installed in advance instead of installing a wet scrubber. Accordingly, a cost of installing the web scrubber may be cut and space utilization may be maximized. Also, countercurrents caused by different suction pressures of exhaust gases discharged from different combustion engines may be prevented by installing the first cleaning water spray nozzle 30 in each of the plurality of exhaust pipes 10 connected to the funnel 20.

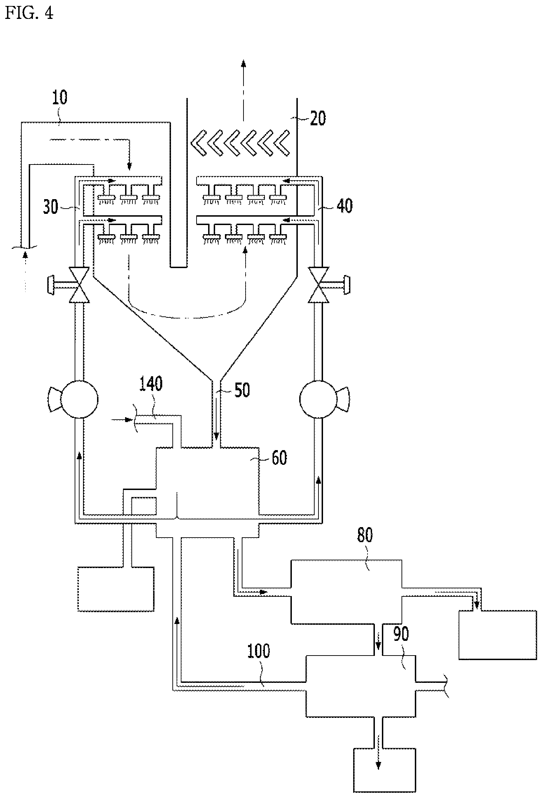

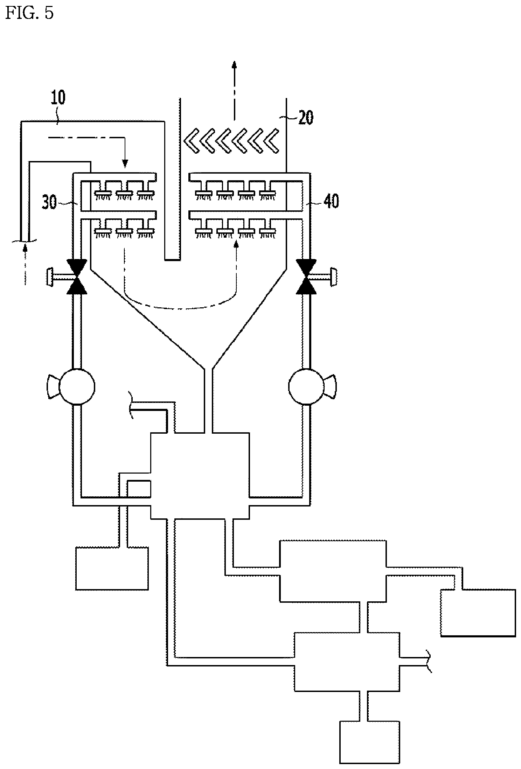

FIG. 3 is a view illustrating an open loop type operation in which seawater suctioned into the seawater supply pipe passes through the exhaust pipe and the funnel and then is discharged outward, FIG. 4 is a view illustrating a closed loop type operation in which seawater suctioned into the seawater supply pipe passes through the exhaust pipe and the funnel and then is circulated through the circulation pipe, and FIG. 5 is a view illustrating an operation of discharging exhaust gases into the air without additional treatment.

First, referring to FIG. 3, seawater suctioned in through the seawater supply pipe 140 passes through the storage tank 60 and then is sprayed respectively on the exhaust pipe 10 and the funnel 20 through the first cleaning water spray nozzle 30 and the second cleaning water spray nozzle 40. Cleaning water supplied through the first cleaning water spray nozzle 30 is sprayed from a top to the bottom of the exhaust pipe 10, and cleaning water supplied through the second cleaning water spray nozzle 40 is sprayed from the top to a bottom of the funnel 20. Since the cleaning water is sprayed onto the inside of the exhaust pipe 10 through the first cleaning water spray nozzle 30, nitrogen oxides, sulfur oxides, particulate matter, and the like included in exhaust gases may be primarily removed. Particularly, since the first cleaning water spray nozzle 30 uniformly sprays cleaning water over the entirety of the lateral cross section inside the exhaust pipe 10, a water curtain may be formed so as to prevent countercurrents of exhaust gases, which are caused by different suction pressures.

Also, since the cleaning water is sprayed on the inside of the funnel 20 through the second cleaning water spray nozzle 40, pollutants included in the exhaust gases may be additionally removed. Through the process, pollutants in exhaust gases are removed and the exhaust gases from which the pollutants are removed are discharged outward through the funnel 20.

The cleaning water sprayed on the exhaust pipe 10 joins the cleaning water sprayed on the funnel 20 and is discharged to the outside of the funnel 20 through the cleaning water discharge pipe 50. Since the funnel 20 has a lateral cross section which gradually decreases toward the cleaning water discharge pipe 50, the cleaning water may be easily discharged without an additional device. The cleaning water discharged through the cleaning water discharge pipe 50 passes through the storage tank 60 and the filter unit 80 sequentially. Here, the neutralizing agent supply portion 70 may supply a neutralizing agent adequately corresponding to a pH value of the cleaning water stored in the storage tank 60. The filter unit 80 separates particulate matter from supplied cleaning water and supplies the cleaning water, from which the particulate matter is separated and which includes salt, to the separator 90. The separator 90 separates the salt from the cleaning water, supplies the salt to the salt storage tank 110, and discharges the cleaning water, which includes salt at a reference value for release to the sea or less, to the sea through the seawater discharge pipe 120. The particulate matter separated in the filter unit 80 is supplied to the sludge tank 130.

Referring to FIG. 4, seawater suctioned in through the seawater supply pipe 140 is supplied to the exhaust pipe 10 and the funnel 20 through the first cleaning water spray nozzle 30 and the second cleaning water spray nozzle 40, respectively.

The cleaning water sprayed on the exhaust pipe 10 through the first cleaning water spray nozzle 30 comes into contact with exhaust gases in the exhaust pipe 10 and primarily removes pollutants, and the cleaning water sprayed on the funnel 20 through the second cleaning water spray nozzle 40 additionally removes pollutants remaining in the exhaust gases which have flowed into the funnel 20 through the exhaust pipe 10. Accordingly, the exhaust gases are discharged through the funnel 20 in a state in which pollutants are removed.

The cleaning water sprayed on the exhaust pipe 10 joins the cleaning water sprayed on the funnel 20 and is discharged through the cleaning water discharge pipe 50 in a state in which pollutants are included and passes through the storage tank 60 and the filter unit 80 sequentially. The filter unit 80 supplies the cleaning water from which particulate matter is removed and which includes salt to the separator 90, and the cleaning water from which salt is removed in the separator 90 is circulated to the storage tank 60 through the circulation pipe 100. That is, other parts of the process of FIG. 4 are the same as those of the process of FIG. 3 except that the cleaning water discharged through the cleaning water discharge pipe 50 is not discharged outside a vessel and is recirculated through the circulation pipe 100 in a state in which some salt has been removed.

The process of FIG. 4 may be performed when it is impossible to discharge seawater to the outside, as in a case of passing through an area in which discharge of seawater is restricted, and the processes of FIG. 3 and FIG. 4 may be performed selectively or sequentially as necessary.

Referring to FIG. 5, when additional treatment is not necessary for exhaust gases which flow through the exhaust pipe 10, spraying of the cleaning water may be cut off by closing the first cleaning water spray nozzle 30 and the second cleaning water spray nozzle 40 and the exhaust gases may be directly discharged into the air through the funnel 20.

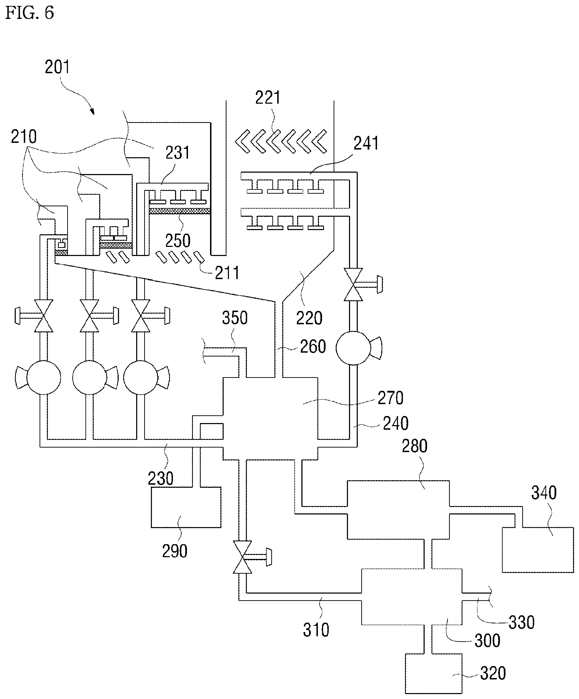

Hereinafter, an exhaust gas discharge device will be described in detail with reference to FIGS. 6 to 10.

The exhaust gas discharge device may remove pollutants included in exhaust gases by supplying cleaning water to a pre-installed funnel instead of installing a wet scrubber. Accordingly, a cost of installing the web scrubber may be cut and space utilization may be maximized. Also, countercurrents caused by different suction pressures of exhaust gases discharged from different combustion engines may be prevented and mixing thereof may be enhanced by installing a cleaning water supply pipe and agitating blades in each of a plurality of exhaust pipes connected to the funnel.

Hereinafter, an exhaust gas discharge device 201 will be described in detail with reference to FIGS. 6 to 8.

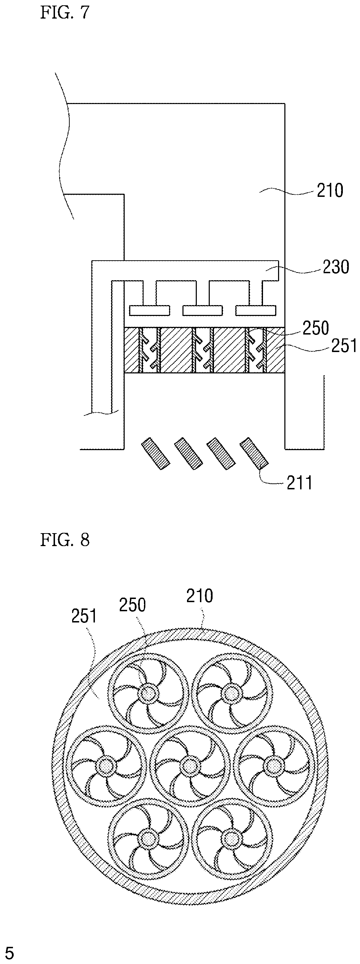

FIG. 6 is a block diagram schematically illustrating components of an exhaust gas discharge device, FIG. 7 is a schematic diagram illustrating a shape of an exhaust pipe of FIG. 6, and FIG. 8 is an enlarged view illustrating agitating blades installed in the exhaust pipe. A description which is the same as that which has been described with reference to FIGS. 1 to 5 will be omitted.

The exhaust gas discharge device 201 according to the present invention includes at least one exhaust pipe 210, a funnel 220, a first cleaning water supply pipe 230, a second cleaning water supply pipe 240, and agitating blades 250.

The exhaust pipe 210 is a pipe which supplies exhaust gases of a combustion engine (not shown) and at least one thereof is connected to the funnel 220 which will be described below. The exhaust pipe 210 may be a path which is connected directly to an exhaust port of the combustion engine to allow high-temperature exhaust gases to move directly therethrough or may be a path through which waste gases move which remain after almost all exhaust heat is reused while passing through a variety of heat exchangers.

The funnel 220 is a device connected to the exhaust pipe 210 and configured to discharge exhaust gases, which have passed through the exhaust pipe 210, to the outside. A plurality of such exhaust pipes 210 may be connected to the funnel 220, may each be connected to each of different combustion engines, and may be arranged radially below the funnel 20. Here, the plurality of exhaust pipes 210 may have different diameters according to capacities of the combustion engines connected thereto. That is, the exhaust gas discharge device 201 according to the present invention has a structure in which exhaust gases discharged from different combustion engines are discharged through the funnel 20 in a batch.

The first cleaning water supply pipe 230 and the second cleaning water supply pipe 240 are connected to the exhaust pipe 210 and the funnel 220, respectively.

Since the first cleaning water supply pipe 230 is a pipe configured to supply cleaning water, which is at least one of seawater, pure water, and a mixture of seawater and pure water, to an inside of the exhaust pipe 210, one end thereof may be connected to a seawater supply pipe 350 or a pure water supply pipe (not shown) and the other end may be connected to the exhaust pipe 210. That is, the first cleaning water supply pipe 230 selectively receives and supplies seawater and pure water to the inside of the exhaust pipe 210. Also, a first cleaning water spray nozzle 231 may be installed at an end of the first cleaning water supply pipe 230, disposed above a connection path which connects the exhaust pipe 210 to the funnel 220, and diverge into a plurality of portions so as to spray cleaning water in the form of particles onto the inside of the exhaust pipe 210.

Since the second cleaning water supply pipe 240 is a pipe configured to supply cleaning water, which is at least one of seawater, pure water, and a mixture of seawater and pure water, to an inside of the funnel 220, one end thereof may be connected to a seawater supply pipe 350 or a pure water supply pipe (not shown) and the other end may be connected to the funnel 220. That is, the second cleaning water supply pipe 240 selectively receives seawater and pure water and supplies the seawater and pure water to the inside of the funnel 220. Also, a second cleaning water spray nozzle 241 may be installed at an end of the second cleaning water supply pipe 240, be disposed above the connection path which connects the exhaust pipe 210 to the funnel 220 and diverge into a plurality of portions so as to spray cleaning water in the form of particles onto the inside of the funnel 220.

Hereinafter, a process in which seawater flows into the first cleaning water supply pipe 230 and the second cleaning water supply pipe 240 and is mainly sprayed through the exhaust pipe 210 and the funnel 20 when cleaning water is limited to seawater will be described in more detail.

The seawater supply pipe 350 is a pipe which suctions and supplies seawater and may suction seawater from the sea. However, the seawater supply pipe 350 is not limited to suctioning and supplying seawater from the sea and may receive seawater stored in a tank as necessary.

A part of seawater which flows in through the seawater supply pipe 350 flows through the first cleaning water supply pipe 230 and is supplied to the exhaust pipe 210, and another part flows through the second cleaning water supply pipe 240 and is supplied to the funnel 220. Here, an end of the first cleaning water supply pipe 230, which is located inside the exhaust pipe, that is, the first cleaning water spray nozzle 231 is disposed above the exhaust pipe 210 and may diverge into a plurality of portions to spray cleaning water in the form of particles. Since the first cleaning water supply pipe 230 sprays cleaning water in the form of particles onto the inside of the exhaust pipe 210, pollutants such as nitrogen oxides, sulfur oxides, particulate matter, and the like included in exhaust gases which flow through the exhaust pipe 210 may dissolve in cleaning water and be removed from the exhaust gases. The cleaning water sprayed from the first cleaning water supply pipe 230 may prevent countercurrents of the exhaust gases caused by different inflow pressures by forming a water curtain. Also, since the sprayed cleaning water decreases a temperature of the exhaust gases, efficiency of removing pollutants from the funnel 220 may be increased.

Here, an end of the second cleaning water supply pipe 240, which is located inside the funnel, that is, the second cleaning water spray nozzle 241, is disposed above the funnel 220 and may diverge into a plurality of portions to spray cleaning water in the form of particles. Since the second cleaning water supply pipe 240 sprays cleaning water in the form of particles onto the inside of the funnel 220, pollutants included in exhaust gases which flow through the funnel 220 may dissolve in the cleaning water and be additionally removed from the exhaust gases such that the exhaust gases from which the pollutants are removed may be discharged outward from the top of the funnel 220. Since pollutants such as nitrogen oxides, sulfur oxides, particulate matter, and the like are removed from the exhaust gases discharged through a top of the funnel 220, the exhaust gases become adequate for exhaust standards so as to be directly discharged into the air.

Meanwhile, agitating blades 250 are installed inside the exhaust pipe 210 between the first cleaning water supply pipe 230 and the funnel 220. The agitating blades 250 mix different exhaust gases or mix exhaust gases with cleaning water and may be formed as static mixers and be installed below the first cleaning water spray nozzle 231. The agitating blade 250 has a diameter smaller than a diameter of the exhaust pipe 210, and a plurality of such agitating blades 250 may be installed in the same plane in the exhaust pipe 210 as shown in FIG. 8. When the plurality of agitating blades 250 are installed in the exhaust pipe 210, a fixing plate 251 for fixing the plurality of agitating blades 250 may be additionally installed in the exhaust pipe 210. Since the agitating blades 250 are installed in each exhaust pipe 210, exhaust gases, which flow through the agitating blades 250, may rotatively flow and be easily mixed with other exhaust gases and cleaning water. Particularly, when nitrogen monoxides included in exhaust gases are oxidized into nitrogen dioxides by injecting an oxidizer into the exhaust pipe 210, mixing of the exhaust gases with the oxidizer may be accelerated by the agitating blades 250. However, the present invention is not limited to the plurality of agitating blades 250 being installed in the exhaust pipe 210, and the number of the agitating blades 250 may be adjusted in proportion to the diameter of the exhaust pipe 210.

Also, n (n is a natural number of 1 or more) of the first cleaning water spray nozzles 231, which are installed in the exhaust pipe 210 at the end of the first cleaning water supply pipe 230, may be arranged at different heights, m (m is a natural number of 2 or more) of the second cleaning water spray nozzles 241, which are installed at the end of the second cleaning water supply pipe 240 and in the funnel 220, may be arranged at different heights. Here, m>n. For example, m=2, n=1 is possible, as shown in the drawing. Since the agitating blades 250 are installed in the exhaust pipe 210, fewer of the first cleaning water spray nozzles 231 are installed due to space constraints. Additionally, since mixing of exhaust gases with the oxidizer may be accelerated by installing the agitating blades 250, effects may be increased despite the smaller number of first cleaning water spray nozzles 231.

Also, a guide 211 may be installed in the exhaust pipe 210 between the agitating blades 250 and the funnel 220. The guide 211 is configured to induce exhaust gases and cleaning water in the exhaust pipe 210 to flow to the funnel 220, and a plurality of such guides formed as plate-shaped members may be arranged in the same plane.

Also, a droplet separator 221 may be installed inside the funnel 220. The droplet separator 221 is configured to come into contact with exhaust gases discharged through the funnel and to condense water particles included in the exhaust gases and may be installed at a top end of the second cleaning water supply pipe 240 while including a plurality of structures. Since the droplet separator 221 is installed at the top end of the second cleaning water supply pipe 240 to come into contact with cleaning water, water particles are removed from exhaust gases which include the water particles such that the exhaust gases may be discharged while being dried and the water particles removed from the exhaust gases may be collected and reused.

The cleaning water, which comes into contact with the exhaust gases including pollutants and includes nitrogen oxides, sulfur oxides, particulate matter, and the like, is discharged to the outside through the cleaning water discharge pipe 260. The cleaning water discharge pipe 260 is formed below the funnel 220 and collects the cleaning water sprayed on the exhaust pipe 210 and the funnel 220 and discharges the collected water to the outside. Here, since nitrogen oxides and sulfur oxides dissolve in the cleaning water in the exhaust pipe 210 and the funnel 220 and strong acidic nitric acid and sulfuric acid are formed, microbes included in the cleaning water may cease to exist. A storage tank 270 is connected to the cleaning water discharge pipe 260.

The storage tank 270 is configured to temporarily store the cleaning water discharged from the funnel 220, and the seawater supply pipe 350, the first cleaning water supply pipe 230, the second cleaning water supply pipe 240, and the cleaning water discharge pipe 260 may be connected to the storage tank 270. That is, cleaning water, which suctions through the seawater supply pipe 350, passes through the storage tank 270 and is supplied to each of the first cleaning water supply pipe 230 and the second cleaning water supply pipe 240, and cleaning water discharged through the cleaning water discharge pipe 260 passes through the storage tank 270 and moves to a filter unit 280 which will be described below.

Also, a neutralizing agent supply portion 290, which supplies a neutralizing agent, may be connected to one side of the storage tank 270 and may neutralize strong acidic cleaning water discharged from the funnel 220. The neutralizing agent may be an alkaline solution, for example, sodium hydroxide (NaOH) or sodium hypochlorite (NaOCI). The neutralizing agent supply portion 290 may be formed as a device which directly produces a neutralizing agent by electrolyzing seawater and the like or may be formed as a simple neutralizing agent tank in which a neutralizing agent is stored. A sensor portion (not shown) may be installed on one side of the storage tank 270 to detect a pH value of the cleaning water in real time, and the neutralizing agent supply portion 290 may adjust a supply amount of a neutralizing agent adequately in association with the sensor portion.

The filter unit 280 is installed at a rear end of the storage tank 270 and is configured to separate particulate matter and may be formed as at least one of a centrifuge, a gravity separator, and a filter. That is, particulate matter may be removed from cleaning water neutralized in the storage tank 270 in the filter unit 280, and the cleaning water from which the particulate matter is removed and which includes salt may be supplied to an additional separator 300 to be separated into salt and cleaning water. The salt separated from the cleaning water may be stored in an additional salt storage tank 320, and the cleaning water from which the salt is removed may be circulated to the storage tank 270 through a circulation pipe 310 or may be discharged to the sea through a seawater discharge pipe 330. Meanwhile, the particulate matter separated from the filter unit 280 may be stored in a sludge tank 340.

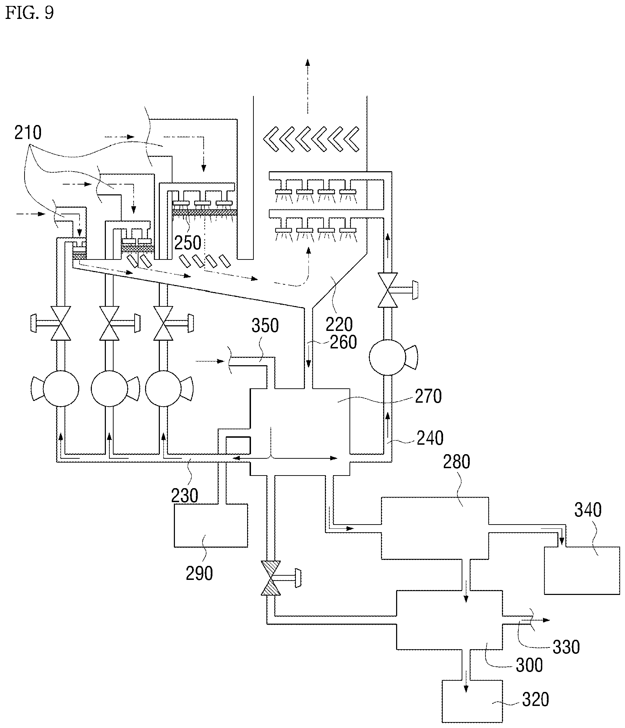

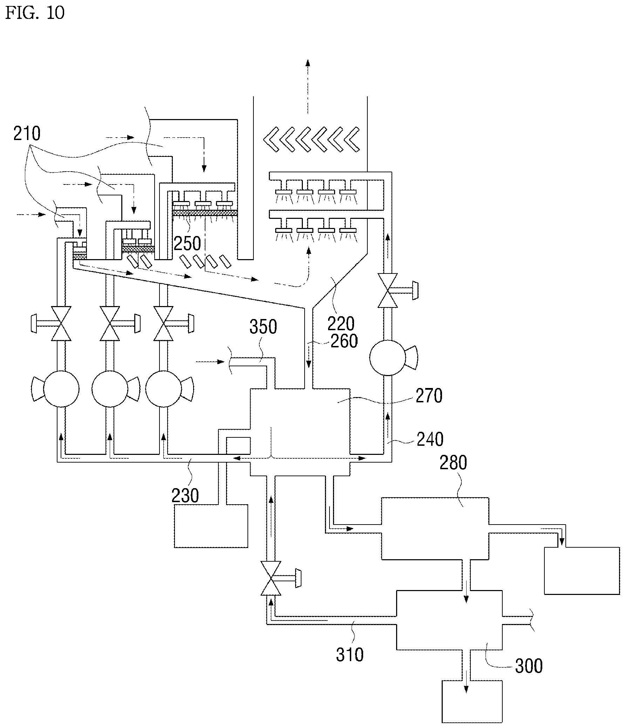

Hereinafter, operations of the exhaust gas discharge device 201 will be described in detail with reference to FIGS. 9 and 10.

FIGS. 9 and 10 are operational views illustrating operations of the exhaust gas discharge device.

FIG. 9 is a view illustrating an open-loop type operation in which seawater flowing into the seawater supply pipe passes through the exhaust pipe and the funnel and is discharged to the outside, and FIG. 10 is a view illustrating a closed-loop type operation in which seawater flowing into the seawater supply pipe passes through the exhaust pipe and the funnel and then is circulated through the circulation pipe.

First, referring to FIG. 9, seawater suctioned in through the seawater supply pipe 350 passes through the storage tank 270 and then is supplied to the plurality of exhaust pipes 210 and the funnel 220 through the first cleaning water supply pipes 230 and the second cleaning water supply pipe 240, respectively. Cleaning water flowing through the first cleaning water supply pipes 230 is sprayed from a top to a bottom of each of the exhaust pipes 210, and cleaning water flowing through the second cleaning water supply pipe 240 is sprayed from a top to a bottom of the funnel 220. Since the cleaning water is sprayed onto the inside of each of the exhaust pipes 210 through the first cleaning water spray nozzle 230, nitrogen oxides, sulfur oxides, particulate matter, and the like included in exhaust gases may be primarily removed.

Particularly, since the agitating blades 250 are installed in each of the exhaust pipes 210, different exhaust gases or exhaust gases with cleaning water may be easily mixed. Also, since the cleaning water is sprayed on the inside the funnel 220 through the second cleaning water supply pipe 240, pollutants included in the exhaust gases may be additionally removed. Through the process, pollutants in exhaust gases are removed and the exhaust gases from which the pollutants are removed are discharged outward through the funnel 220.

The cleaning water sprayed on the exhaust pipe 210 joins the cleaning water sprayed on the funnel 220 and is discharged to the outside of the funnel 220 through the cleaning water discharge pipe 260. Since the storage tank 270 and the filter unit 280 are installed above the cleaning water discharge pipe 260, the cleaning water passes through the storage tank 270 and the filter unit 280 sequentially. Here, the neutralizing agent supply portion 290 may supply a neutralizing agent adequately corresponding to a pH value of the cleaning water stored in the storage tank 270. The filter unit 280 separates particulate matter from supplied cleaning water and supplies the cleaning water, from which the particulate matter is removed and which includes salt, to the separator 300. The separator 300 separates the salt from the cleaning water, supplies the salt to the salt storage tank 320, and discharges the cleaning water, from which salt is removed, to the sea through the seawater discharge pipe 330. The particulate matter separated in the filter unit 280 is supplied to the sludge tank 340.

Subsequently, seawater suctioned in through the seawater supply pipe 350 is supplied to the exhaust pipe 210 and the funnel 220 through the first cleaning water supply pipe 230 and the second cleaning water supply pipe 240, respectively. The cleaning water supplied to the exhaust pipe 210 through the first cleaning water spray nozzle 30 comes into contact with exhaust gases in the exhaust pipe 210 and primarily removes pollutants, and the cleaning water supplied to the funnel 220 through the second cleaning water supply pipe 240 additionally removes pollutants remaining in the exhaust gases which have flowed into the funnel 220 through the exhaust pipe 210. Accordingly, the exhaust gases are discharged through the funnel 220 in a state in which pollutants have been removed.

The cleaning water sprayed on the exhaust pipe 210 joins the cleaning water sprayed on the funnel 220 and is discharged through the cleaning water discharge pipe 260 in a state in which pollutants are included and passes through the storage tank 270 and the filter unit 280 sequentially. The filter unit 280 supplies the cleaning water, from which particulate matter is removed and which includes salt, to the separator 300, and the cleaning water, from which salt is removed in the separator 300, is circulated to the storage tank 270 through the circulation pipe 310. That is, other parts of the process of FIG. 10 are the same as those of the process of FIG. 9 except that the cleaning water discharged through the cleaning water discharge pipe 260 is not discharged outside a vessel and is recirculated through the circulation pipe 310 in a state in which salt has been removed.

The process of FIG. 10 may be performed when it is impossible to discharge seawater to the outside, as in a case of passing through an area in which discharge of seawater is restricted, and the processes of FIG. 9 and FIG. 10 may be performed selectively or sequentially as necessary.

The exhaust gas discharge device is not limited to the exhaust pipe and the funnel and may be applied to gas pipes having a variety of shapes. That is, an exhaust gas discharge device may include a first gas pipe which extends vertically and in which cleaning water is sprayed downward, a second gas pipe which is connected to the first gas pipe and extends vertically and in which cleaning water is sprayed downward, and a cleaning water discharge pipe which is formed at a connection part of the first gas pipe and the second gas pipe and discharges the sprayed cleaning water. Here, pollutants included in exhaust gases may be removed by the cleaning water while the exhaust gases pass through the first and second gas pipes which are arranged in a U shape.

Although the present invention has been described with reference to the attached drawings, it should be understood by one of ordinary skill in the art that the present invention may be implemented in other detailed forms without changing the technical concept or essential features thereof. Therefore, the above-described embodiment should be understood to be exemplary and not limiting in every aspect.

## Claims

1. An exhaust gas discharge device (1) comprising:
at least one exhaust pipe (10, 210) configured to supply exhaust gas of a combustion engine;
a funnel (20) connected to the exhaust pipe (10) and configured to discharge the exhaust gas which has passed through the exhaust pipe (10);
a first cleaning water supply pipe (230) configured to supply cleaning water to an inside of the exhaust pipe (10);
a second cleaning water supply pipe (240) configured to supply cleaning water to an inside of the funnel (20); and
a storage tank (60, 270) connected to a cleaning water discharge pipe (50) and configured to store cleaning water discharged from the funnel (20); **characterised in that** the exhaust gas discharge device (1) further comprises
a neutralizing agent supply portion (70) connected to the storage tank (60) and configured to supply a neutralizing agent,
a static mixer (250) installed in the exhaust pipe (10) between the first cleaning water supply pipe (140) and the funnel (20) and configured to mix exhaust gas with cleaning water, wherein the static mixer (250) has a diameter smaller than a diameter of the exhaust pipe (10, 210), and a plurality of such static mixers are installed in the exhaust pipe (10, 210).

2. The exhaust gas discharge device (1) of claim 1, wherein a plurality of such exhaust pipes (10, 210) are connected to the funnel (220), and each of the exhaust pipes (10, 210) is connected to a different engine.

3. The exhaust gas discharge device (1) of claim 1, wherein a plurality of such exhaust pipes (10, 210) are connected to the funnel (20, 220), and the exhaust pipes (10, 210) have different diameters from one another.

4. The exhaust gas discharge device (1) of claim 1, further comprising a droplet separator (221) which is installed at a top end of the second cleaning water supply pipe (10, 210), includes a plurality of structures, and comes into contact with exhaust gas discharged through the funnel (20, 220).

5. The exhaust gas discharge device (1) of claim 1, wherein a first cleaning water spray nozzle (30) is installed at an end of the first cleaning water supply pipe (140) and inside the exhaust pipe (10, 210), and
wherein the static mixer (250) is installed inside the exhaust pipe (10, 210) and below the first cleaning water spray nozzle (30).

6. The exhaust gas discharge device (1) of claim 1, wherein a first cleaning water spray nozzle (30) is installed at an end of the first cleaning water supply pipe (140) and inside the exhaust pipe (10, 210),
wherein a second cleaning water spray nozzle (40) is installed at an end of the second cleaning water supply pipe (240) and inside the funnel (20, 220),
wherein n (n is a natural number of 1 or more) of such first cleaning water spray nozzles (231) are arranged at different heights,
wherein m (m is a natural number of 2 or more) of such second cleaning water spray nozzles (40) are arranged at different heights, and
wherein m>n.

## Patentansprüche

1. Abgasausstoßvorrichtung (1), umfassend:
mindestens ein Abgasrohr (10, 210), das konfiguriert ist, um Abgas eines Verbrennungsmotors zuzuführen;
einen Trichter (20), der mit dem Abgasrohr (10) verbunden und konfiguriert ist, um das Abgas, das durch das Abgasrohr (10) hindurchgeströmt ist, auszustoßen;
ein erstes Reinigungswasserzufuhrrohr (230), das konfiguriert ist, um Reinigungswasser zu einem Inneren des Abgasrohrs (10) zuzuführen;
ein zweites Reinigungswasserzufuhrrohr (240), das konfiguriert ist, um Reinigungswasser zu einem Inneren des Trichters (20) zuzuführen; und
einen Speichertank (60, 270), der mit einem Reinigungswasserauslassrohr (50) verbunden und konfiguriert ist, um Reinigungswasser zu speichern, das aus dem Trichter (20) ausgestoßen wird;
**dadurch gekennzeichnet, dass** die Abgasausstoßvorrichtung (1) ferner umfasst:
einen Neutralisationsmittelversorgungsabschnitt (70), der mit dem Speichertank (60) verbunden und konfiguriert ist, um ein Neutralisationsmittel zuzuführen,
einen statischen Mischer (250), der in dem Abgasrohr (10) zwischen dem ersten Reinigungswasserzufuhrrohr (140) und dem Trichter (20) installiert und konfiguriert ist, um Abgas mit Reinigungswasser zu mischen, wobei der statische Mischer (250) einen Durchmesser aufweist, der kleiner als ein Durchmesser des Abgasrohrs (10, 210) ist, und eine Vielzahl solcher statischen Mischer in dem Abgasrohr (10, 210) installiert sind.

2. Abgasausstoßvorrichtung (1) nach Anspruch 1, wobei eine Vielzahl solcher Abgasrohre (10, 210) mit dem Trichter (220) verbunden sind und jedes der Abgasrohre (10, 210) mit einem unterschiedlichen Motor verbunden ist.

3. Abgasausstoßvorrichtung (1) nach Anspruch 1, wobei eine Vielzahl solcher Abgasrohre (10, 210) mit dem Trichter (20, 220) verbunden sind und die Abgasrohre (10, 210) voneinander unterschiedliche Durchmesser aufweisen.

4. Abgasausstoßvorrichtung (1) nach Anspruch 1, ferner umfassend einen Tröpfchenabscheider (221), der an einem oberen Ende des zweiten Reinigungswasserzufuhrrohrs (10, 210) installiert ist, eine Vielzahl von Strukturen einschließt und mit Abgas in Kontakt kommt, das durch den Trichter (20, 220) abgestoßen wird.

5. Abgasausstoßvorrichtung (1) nach Anspruch 1, wobei eine erste Reinigungswassersprühdüse (30) an einem Ende des ersten Reinigungswasserzufuhrrohrs (140) und im Inneren des Abgasrohrs (10, 210) installiert ist, und
wobei der statische Mischer (250) im Inneren des Abgasrohrs (10, 210) und unterhalb der ersten Reinigungswassersprühdüse (30) installiert ist.

6. Abgasausstoßvorrichtung (1) nach Anspruch 1, wobei eine erste Reinigungswassersprühdüse (30) an einem Ende des ersten Reinigungswasserzufuhrrohrs (140) und im Inneren des Abgasrohrs (10, 210) installiert ist,
wobei eine zweite Reinigungswassersprühdüse (40) an einem Ende des zweiten Reinigungswasserzufuhrrohrs (240) und im Inneren des Trichters (20, 220) installiert ist,
wobei n (n ist eine natürliche Zahl von 1 oder mehr) solcher ersten Reinigungswassersprühdüsen (231) in unterschiedlichen Höhen angeordnet sind,
wobei m (m ist eine natürliche Zahl von 2 oder mehr) solcher zweiten Reinigungswassersprühdüsen (40) in unterschiedlichen Höhen angeordnet sind, und
wobei m>n.

## Revendications

1. Dispositif d'évacuation de gaz d'échappement (1) comprenant :
au moins un tuyau d'échappement (10, 210) conçu pour fournir du gaz d'échappement d'un moteur à combustion ;
un entonnoir (20) relié au tuyau d'échappement (10) et conçu pour évacuer le gaz d'échappement qui est passé par le tuyau d'échappement (10) ;
un premier tuyau d'alimentation en eau de nettoyage (230) conçu pour fournir de l'eau de nettoyage à un intérieur du tuyau d'échappement (10) ;
un second tuyau d'alimentation en eau de nettoyage (240) conçu pour fournir de l'eau de nettoyage à un intérieur de l'entonnoir (20) ; et
un réservoir de stockage (60, 270) relié à un tuyau d'évacuation d'eau de nettoyage (50) et conçu pour stocker de l'eau de nettoyage évacuée de l'entonnoir (20) ;
**caractérisé en ce que** le dispositif d'évacuation de gaz d'échappement (1) comprend en outre
une partie d'alimentation en agent neutralisant (70) reliée au réservoir de stockage (60) et conçue pour fournir un agent neutralisant,
un mélangeur statique (250) installé dans le tuyau d'échappement (10) entre le premier tuyau d'alimentation en eau de nettoyage (140) et l'entonnoir (20) et conçu pour mélanger un gaz d'échappement avec de l'eau de nettoyage, le mélangeur statique (250) ayant un diamètre inférieur à un diamètre du tuyau d'échappement (10, 210), et une pluralité de tels mélangeurs statiques étant installés dans le tuyau d'échappement (10, 210).

2. Dispositif d'évacuation de gaz d'échappement (1) selon la revendication 1, dans lequel une pluralité de tels tuyaux d'échappement (10, 210) sont reliés à l'entonnoir (220), et chacun des tuyaux d'échappement (10, 210) est relié à un moteur différent.

3. Dispositif d'évacuation de gaz d'échappement (1) selon la revendication 1, dans lequel une pluralité de tels tuyaux d'échappement (10, 210) sont reliés à l'entonnoir (20, 220), et les tuyaux d'échappement (10, 210) ont des diamètres différents l'un de l'autre.

4. Dispositif d'évacuation de gaz d'échappement (1) selon la revendication 1, comprenant en outre un séparateur de gouttelettes (221) qui est installé à une extrémité supérieure du second tuyau d'alimentation en eau de nettoyage (10, 210), comporte une pluralité de structures, et entre en contact avec des gaz d'échappement évacués à travers l'entonnoir (20, 220).

5. Dispositif d'évacuation de gaz d'échappement (1) selon la revendication 1, dans lequel une première buse de pulvérisation d'eau de nettoyage (30) est installée à une extrémité du premier tuyau d'alimentation en eau de nettoyage (140) et à l'intérieur du tuyau d'échappement (10, 210), et
le mélangeur statique (250) étant installé à l'intérieur du tuyau d'échappement (10, 210) et en dessous de la première buse de pulvérisation d'eau de nettoyage (30).

6. Dispositif d'évacuation de gaz d'échappement (1) selon la revendication 1, dans lequel une première buse de pulvérisation d'eau de nettoyage (30) est installée à une extrémité du premier tuyau d'alimentation en eau de nettoyage (140) et à l'intérieur du tuyau d'échappement (10, 210),
une seconde buse de pulvérisation d'eau de nettoyage (40) étant installée à une extrémité du second tuyau d'alimentation en eau de nettoyage (240) et à l'intérieur de l'entonnoir (20, 220),
n (n est un nombre naturel de 1 ou plus) de telles premières buses de pulvérisation d'eau de nettoyage (231) étant agencées à des hauteurs différentes,
m (m est un nombre naturel de 2 ou plus) de telles secondes buses de pulvérisation d'eau de nettoyage (40) étant agencées à des hauteurs différentes, et
m > n.
